(19) **Europäisches Patentamt**
**European Patent Office**
**Office européen des brevets**

(11) **EP 2 134 047 A1**

(12) **EUROPEAN PATENT APPLICATION**
published in accordance with Art. 153(4) EPC

(43) Date of publication:
**16.12.2009 Bulletin 2009/51**

(51) Int Cl.:
**H04L 27/02** (2006.01)    **H04B 1/04** (2006.01)

(21) Application number: **07741217.9**

(22) Date of filing: **06.04.2007**

(86) International application number:
**PCT/JP2007/057781**

(87) International publication number:
**WO 2008/129610 (30.10.2008 Gazette 2008/44)**

(84) Designated Contracting States:
**AT BE BG CH CY CZ DE DK EE ES FI FR GB GR HU IE IS IT LI LT LU LV MC MT NL PL PT RO SE SI SK TR**

(71) Applicant: **Panasonic Corporation**
**Kadoma-shi**
**Osaka 571-8501 (JP)**

(72) Inventor: **NANRI, Masahiko**
**Osaka-shi, Osaka 540-5207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **TRANSMITTER AND SSB SIGNAL GENERATION METHOD**

(57)    A transmitter of a complex SSB signal in which the bit error rate characteristic on the receiving side is improved remarkably. The transmitter generates the SSB signal using an N-fold oversampler (102) which performs N-fold oversampling processing for each transmission symbol, a serial-parallel conversion circuit (104) which parallelizes the sampling data obtained by the N-fold oversampler (102) to parallel data of N systems for each symbol, an N-point FFT circuit (105) which fast-Fourier-transforms the parallel data of the N systems, a zero insertion circuit (106) which zeros the component of either the USB component signal or the LSB component signal outputted from the FFT circuit (105), an IFFT circuit (107) which inverse-fast-Fourier-transforms the output from the zero insertion circuit (106), and a parallel-serial conversion circuit (108) which parallel-serial-converts the output from the IFFT circuit (107).

100 TRANSMITTING APPARATUS

FIG.9

EP 2 134 047 A1

**Description**

Technical Field

The present invention relates to a transmitting apparatus and SSB signal forming method for making transmission signals SSB (Single Side Band) signals and transmitting the SSB signals.

Background Art

SSB technology is a conventional technology for narrowing the bandwidth of transmission signals. SSB technology was actively studied in the prime time of analogue communication, and a Weaver-SSB scheme is a representative scheme. By contrast with this, for example, the RZ-SSB scheme and SSB-QPSK scheme (i.e. Mujtaba scheme) are representative schemes in the area of digital communication. The Mujtaba scheme is introduced in, for example, Non-Patent Document 1 and Non-Patent Document 2.

In digital SSB technology, the Hilbert transform is very important. Here, the basics of the Hilbert transform will be explained.

(1) Hilbert transform

When the Fourier transform of a continuous time signal x(t) is represented as $X(\omega)$, the Hilbert transform H[X$(\omega)$] of $X(\omega)$ in the frequency domain is represented by the following equation:

[ 1 ]

$$H\big[X(\omega)\big] = -j\,\mathrm{sgn}(\omega)X(\omega) \quad \dots \text{(Equation 1)}$$

where

$$\mathrm{sgn}(\omega) = \begin{cases} 1 & \omega > 0 \\ 0 & \omega = 0 \\ -1 & \omega < 0 \end{cases}$$

By contrast with this, the Hilbert transform H[x(t)] in the time domain x(t) is defined as the inverse Fourier transform of H[X$(\omega)$], and is represented by the following equation. Here, in the following equation, F$^{-1}$ stands for the inverse Fourier transform and * stands for convolution operation.

[ 2 ]

$$H\big[x(t)\big] = F^{-1}[H[X(\omega)]] = F^{-1}[-j\,\mathrm{sgn}(\omega)X(\omega)]$$
$$= F^{-1}[-j\,\mathrm{sgn}(\omega)] * F^{-1}[X(\omega)]$$
$$= \frac{1}{\pi t} * x(t) \qquad\qquad \dots \text{(Equation 2)}$$
$$= \frac{1}{\pi}\int_{-\infty}^{\infty} \frac{x(\tau)}{t-\tau}\,d\tau$$

$X(\omega)$ and H[x$(\omega)$] change only the phases and, consequently, x(t) and H[x(t)] have the same power spectra and auto-correlation functions. Further, the relationship of the following equation holds between x(t) and H[x(t)].

[3]

$$\int_{-\infty}^{\infty} x^*(t) \cdot H[x(t)]dt = \int_{-\infty}^{\infty} F^{-1}[X^*(\omega) * H[X(\omega)]] \, dt$$

$$= \frac{1}{2\pi} \int_{-\infty}^{\infty} \int_{-\infty}^{\infty} X^*(\omega) * H[X(\omega)] e^{j\omega t} \, d\omega dt$$

$$= \frac{1}{2\pi} \int_{-\infty}^{\infty} \int_{-\infty}^{\infty} \int_{-\infty}^{\infty} X^*(\omega - \omega')H[X(\omega')]d\omega' e^{j\omega t} \, d\omega dt$$

$$= \int_{-\infty}^{\infty} \int_{-\infty}^{\infty} x^*(t)e^{-j\omega' t} H[X(\omega')]d\omega' dt \qquad \dots \text{(Equation 3)}$$

$$= \int_{-\infty}^{\infty} X^*(\omega')H[X(\omega')]d\omega'$$

$$= \int_{-\infty}^{\infty} (-j)\,\mathrm{sgn}(\omega')X^*(\omega')X(\omega') \, d\omega'$$

$$= -j\int_{-\infty}^{\infty} \mathrm{sgn}(\omega')|X(\omega')|^2 d\omega'$$

$$= 0$$

That is, H[x(t)] and the complex conjugate $x^*(t)$ of x(t) are orthogonal to each other.

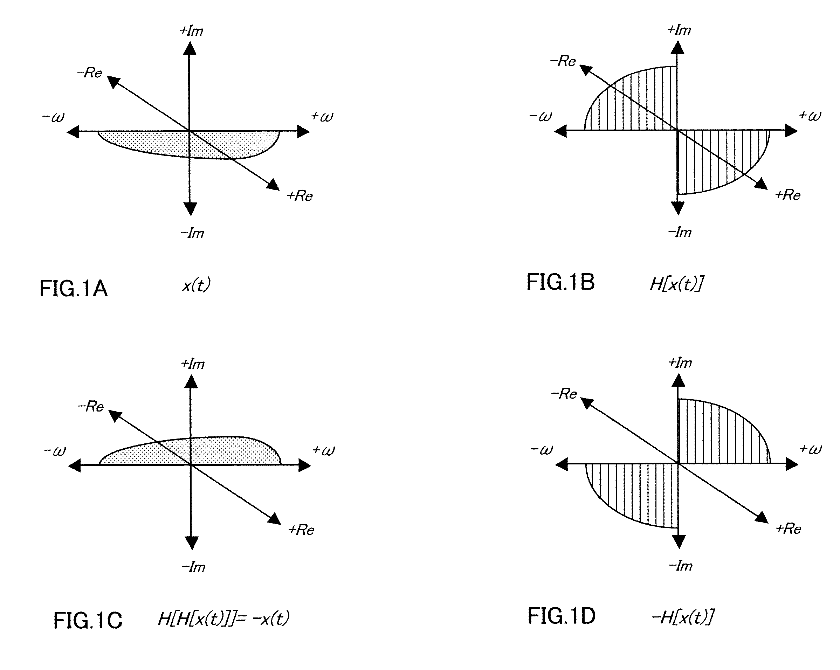

Next, how the spectrum of a continuous time signal changes by the Hilbert transform will be graphically explained. Here, a case will be studied where, as shown in FIG.1A, x(t) is a continuous time signal formed with real domain frequency components alone. As shown in equation 1, the Hilbert transform H[x(t)] of x(t) is performed by multiplying the positive frequency components by -j and by multiplying the negative frequency components by +j. Therefore, with the spectrum of H[x(t)], only the imaginary domain frequency components are arranged symmetrically about the origin, as shown in FIG.1B. Further, if H[x(t)] is subjected to the Hilbert transform, the spectrum appears only in the real domain as shown in FIG.1C. Here, as is clear from equation 1, Cauchy's theorem applies to the Hilbert transform, and, consequently, energy is maintained throughout the process of the Hilbert transform. Accordingly, the following equation holds.

[4]

$$H[H[X(\omega)]] = H[-j\,\mathrm{sgn}(\omega)X(\omega)]$$

$$= -j\,\mathrm{sgn}(\omega)\{-j\,\mathrm{sgn}(\omega)X(\omega)\}$$

$$= -\{\mathrm{sgn}(\omega)\}^2 X(\omega) \qquad \dots \text{(Equation 4)}$$

$$= -X(\omega)$$

When this equation is represented in the time domain, the following equation holds.

[5]

$$H[H[x(t)]] = F^{-1}\{-X(\omega)\}$$

$$= -x(t) \qquad \dots \text{(Equation 5)}$$

-H[x(t)] can be obtained (FIG.1D) by further performing a Hilbert transform of the signal in FIG.1C, and the original sequence x(t) can be obtained by further performing a Hilbert transform of -H[x(t)].

(2) USB and LSB generating method

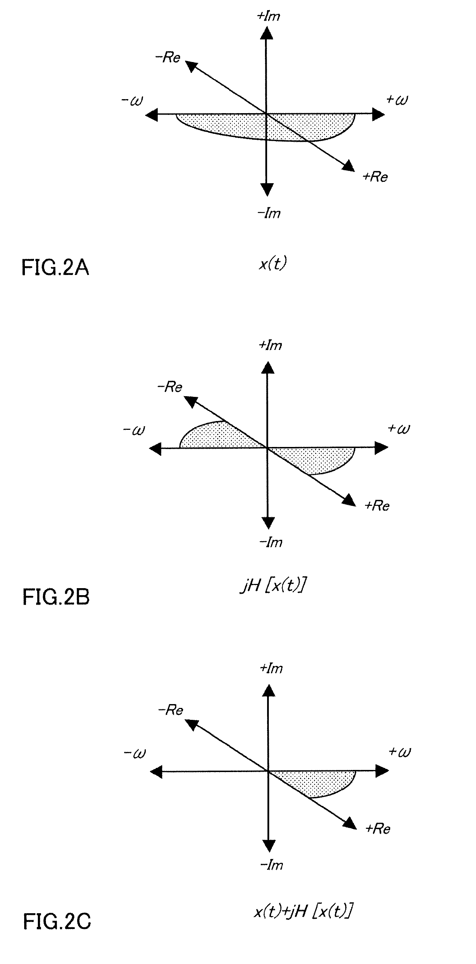

Here, a method for generating a USB (Upper Side Band) and an LSB (Lower Side Band) utilizing the above-described characteristics of the Hilbert transform will be explained. Similar to above, a transmission data sequence x(t) formed with real domain frequency components alone are studied. Here, a spectral representation of x(t) is as shown in FIG.2A. As shown in FIG.1B, when the Hilbert transform of x(t) is performed, x(t) is multiplied by j and the overall spectrum rotates 90 degrees in the positive domain, so that it is possible to acquire the spectrum shown in FIG.2B.

The sequence acquired by performing coherent addition of the spectra shown in FIG.2A and FIG.2B is as follows.

[6]

$$X(\omega) + jH[X(\omega)] = X(\omega) + \mathrm{sgn}(\omega)X(\omega)$$
$$= \begin{cases} 0 & \omega \le 0 \\ 2X(\omega) & \omega > 0 \end{cases} \qquad \dots \text{(Equation 6)}$$

Equation 6 can be illustrated as shown in FIG.2C. That is, a USB signal formed with real domain upper side band components alone can be acquired. A time domain representation of this USB signal is as represented by the following equation.

[7]

$$S_{USBre}(t) = x(t) + jH[x(t)] \qquad \dots \text{(Equation 7)}$$

A USB signal $S_{USBim}(t)$ formed with imaginary components alone, an LSB signal $S_{LSBre}(t)$ formed with real components alone and an LSB signal $S_{LSBim}(t)$ formed with imaginary components alone are generated by the same methods as described above. To be more specific, the process of forming the USB signal $S_{usBim}(t)$ with imaginary components alone is as shown in FIG.3A, FIG.3B and FIG.3C, and the result is represented by equation 8. Further, the process of forming an LSB signal $S_{LSBre}(t)$ with the real components alone is as shown in FIG.4A, FIG.4B and FIG.4C, and the result is represented by equation 9. Furthermore, the process of forming an LSB signal $S_{LSBim}(t)$ with imaginary components alone is as shown in FIG.5A, FIG.5B and FIG.5C, and the result is represented by equation 10.

[8]

$$S_{USBim}(t) = -H[x(t)] + jx(t) \qquad \dots \text{(Equation 8)}$$

[9]

$$S_{LSBre}(t) = x(t) - jH[x(t)] \qquad \dots \text{(Equation 9)}$$

[10]

$$S_{LSBim}(t) = H[x(t)] + jx(t) \qquad \dots \text{(Equation 10)}$$

(3) Configuration

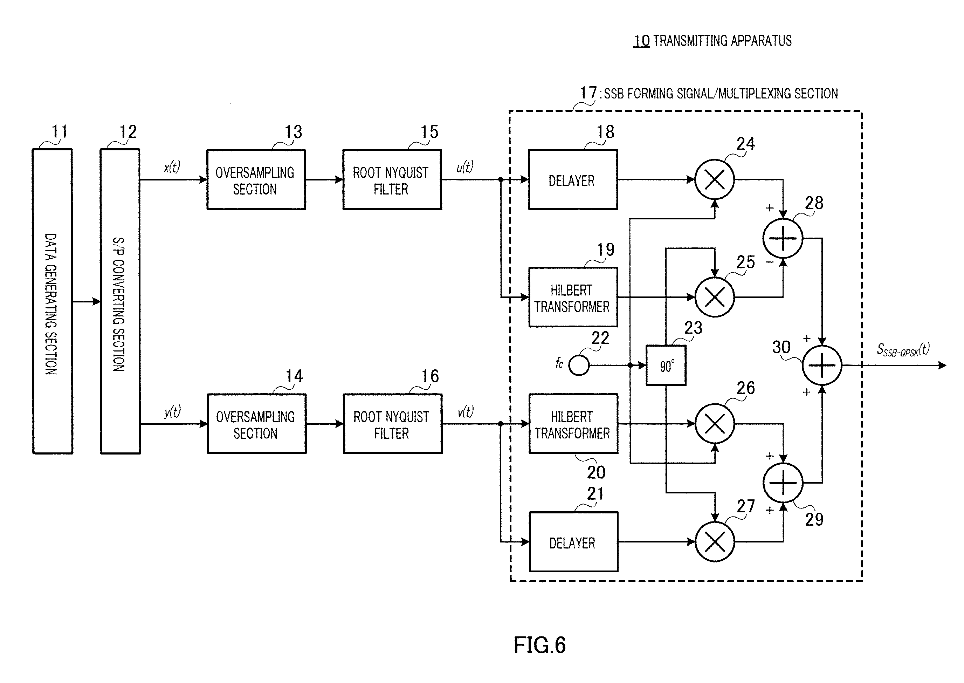

Taking the above-described USB and LSB generating method into account, the transmitting apparatus for generating an SSB-QPSK (orthogonal multiplexing of the USB (Real) and the USB (Imaginary)) modulated wave formed with USB signals alone, only needs to be configured as shown in FIG.6.

In transmitting apparatus 10 in FIG.6, first, data generating section 11 generates transmission data, and serial-to-parallel converting section (S/P section) 12 performs serial-to-parallel conversion of the generated transmission data. Further, in transmitting apparatus 10, oversampling sections 13 and 14 oversamples the transmission sequences x(t) and y(t) subjected to serial-to-parallel conversion, and then inputs transmission sequences x(t) and y(t) in root Nyquist filters 15 and 16. Root Nyquist filters 15 and 16 send out filter outputs u(t) and v(t), to SSB signal forming/multiplexing section 17.

SSB signal forming/multiplexing section 17 inputs the filter output u(t) to delayer 18 and Hilbert transformer 19, and inputs the filter output v(t) to Hilbert transformer 20 and delayer 21.

Hilbert transformers 19 and 20 are each formed with an FIR filter of a tap coefficient 1/pt (see equation 2). Delayers 18 and 21 delay input signals by the time required for a Hilbert transform, and outputs the input signals.

The output of delayer 18, the output of Hilbert transformer 19, the output of Hilbert transformer 20 and the output of delayer 21 are sent out to multiplier 24, multiplier 25, multiplier 26 and multiplier 27, respectively. Further, the carrier frequency signal ($\cos\omega_c t$) generated in carrier frequency signal generator 22 is received as input in multipliers 24 and 26, and a carrier frequency signal ($\sin\omega_c t$) having a phase, shifted by 90 degrees in phase shifter 23, is received as input in multipliers 25 and 27. By this means, multipliers 24 and 26 multiply the outputs of delayer 18 and Hilbert transformer 20 by the carrier frequency signal ($\cos\omega_c t$), and multipliers 25 and 27 multiply the outputs of Hilbert transformer 19 and delayer 21 by the carrier frequency signal ($\sin\omega_c t$) having a phase shifted 90 degrees.

Adder 28 subtracts the output of multiplier 25 from the output of multiplier 24, and adder 29 adds the outputs of multiplier 26 and multiplier 27. Further, adder 30 adds the outputs of adder 28 and adder 29, so that an SSB modulated wave $S_{SSB-QPSK}(t)$ is acquired. That is, $S_{SSB-QPSK}(t)$ is represented by the following equation.

[1 1]

$$S_{SSB-QPSK}(t) = \{u(t) + H[v(t)]\}\cos\omega_c t + \{-H[u(t)] + v(t)\}\sin\omega_c t \quad \ldots \quad (\text{Equation } 11)$$

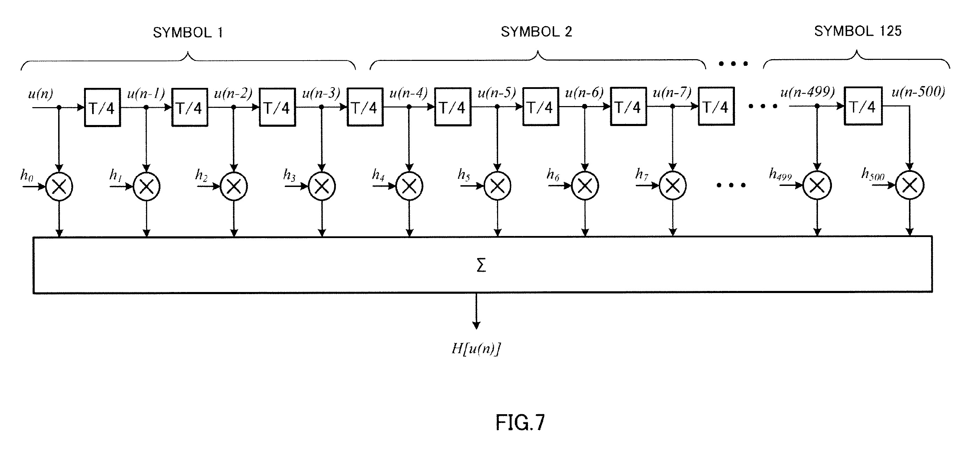

FIG.7 shows a configuration example of Hilbert transformers 19 and 20. As shown in FIG.7, the Hilbert transformer can be realized with the FIR filters having tap coefficients $1/(\pi t)$. FIG.7 shows a configuration example in case where transmission data u(t) is oversampled four times. Also, FIG.7 shows a configuration example in case where the tap coefficient of the FIR filter is 500.

Non-Patent Document 1: "A Novel Scheme for Transmitting QPSK as a Single-Sideband Signal," Syed Aon Mujtaba, IEEE Globalcomm. pp.592-597, 1998

Non-Patent Document 2: "Performance Analysis of Coded SSB-QPSK in Mobile Radio Channels," Syed Aon Mujtaba, IEEE Globalcomm. pp.112-117, 1998

Disclosure of Invention

Problems to be Solved by the Invention

By the way, as described above, the Hilbert transform needs to be performed to make transmission signals SSB signals, and, the Hilbert transform is generally performed using an FIR filter.

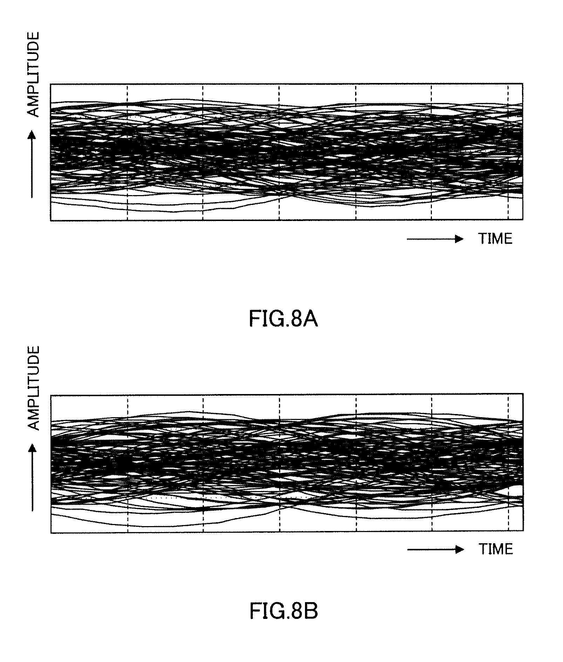

However, as is clear from FIG.7, the Hilbert transform sequence H[u(n)] at time t=n, which includes past symbol information, is outputted. Therefore, a case where symbol information at time t=n and past symbol information are independent from each other is equivalent to a case where the symbol at time t=n is influenced by interference between neighboring symbols. As a result, as shown in FIG.8 (FIG.8A shows the eye pattern of the transmission bit 1 and FIG. 8B shows the eye pattern of the transmission bit 2 different from the transmission bit 1), there is a problem that the eye of the eye pattern is not open on the receiving side. Therefore, in case where a transmitting apparatus that makes complex baseband signals, such as QPSK, signals SSB signals and transmits the SSB signals, adopts a conventional configuration, it is difficult to perform accurate demodulation on the receiving side and there is a problem that the bit error rate performance deteriorates.

It is therefore an object of the present invention to provide a transmitting apparatus and SSB signal forming method for substantially improving the bit error rate performance of the receiving side, in the transmitting apparatus that makes complex baseband signals SSB signals and transmits the SSB signals.

Means for Solving the Problem

The transmitting apparatus and SSB signal forming method according to the present invention form SSB signals by performing a Hilbert transform on a per symbol basis.

One aspect of the present invention includes: oversampling a transmission symbol to an N-fold; performing an N-point Fourier transform of an oversampled signal; inserting zero in components of one of an upper side band component signal and a lower side band component signal included in a signal subjected to the Fourier transform; and performing an inverse Fourier transform of the signal which is subjected to the Fourier transform and in which the zero is inserted in the components.

Advantageous Effects of Invention

According to the present invention, a Hilbert transform is performed on a per symbol basis, so that it is possible to substantially improve the bit error rate performance of the receiving side. Further, a Hilbert transform can be performed on a per symbol basis accurately, with a comparatively simple configuration.

Brief Description of Drawings

FIG.1 illustrates a Hilbert transform with respect to a continuous time signal x(t);
FIG.1A shows the spectrum of the continuous time signal x(t) formed with real domain frequency components alone;
FIG.1B shows the spectrum of H[x(t)];
FIG.1C shows the spectrum of H[H[x(t)]];
FIG.1D shows the spectrum of -H[x(t)];
FIG.2 illustrates a method of generating the USB using only real components;
FIG.2A shows the spectrum of the continuous time signal x(t) formed with real domain frequency components alone;
FIG.2B shows the spectrum of jH[x(t)];
FIG.2C shows the spectrum of x(t)+jH[x(t)];

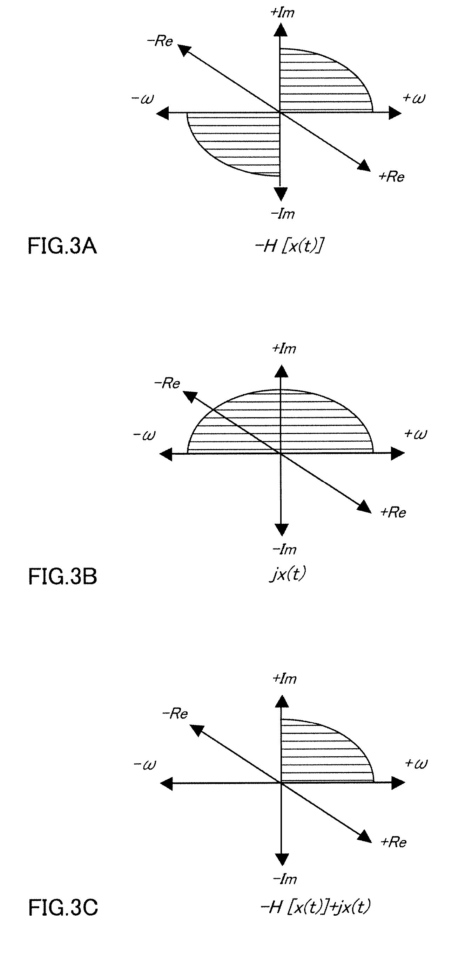

FIG.3 illustrates a method of generating the USB using only imaginary components;
FIG.3A shows the spectrum of -H[x(t)];
FIG.3B shows the spectrum of jx(t);
FIG.3C shows the spectrum of -H[x(t)]+jx(t);

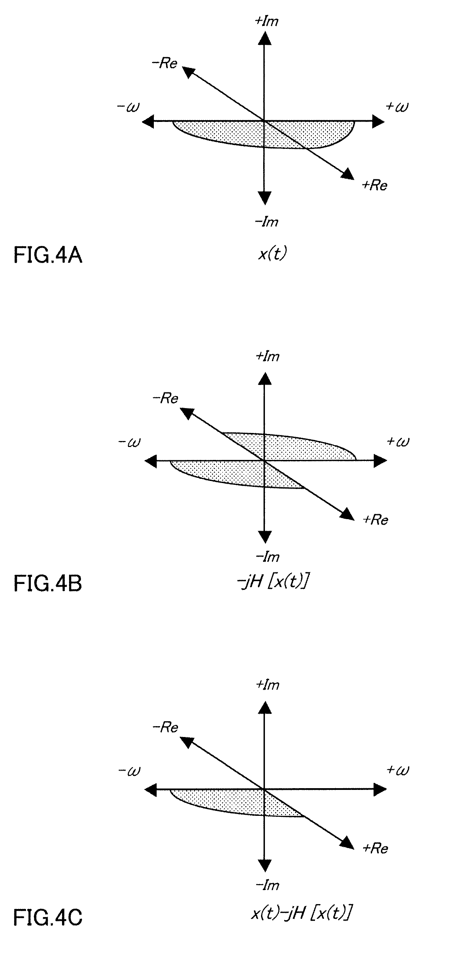

FIG.4 illustrates a method of generating the LSB using only real components;
FIG.4A shows the spectrum of a continuous time signal x(t) formed with real domain frequency components alone;
FIG.4B shows the spectrum of -jH[x(t)];
FIG.4C shows the spectrum of x(t)-jH[x(t)];

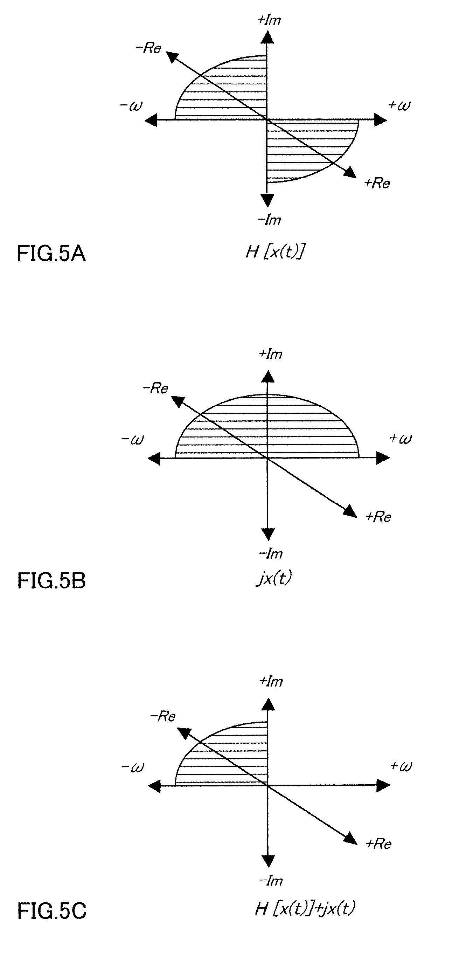

Fig.5 illustrates a method of generating the LSB formed with imaginary components alone;
FIG.5A shows the spectrum of H[x(t)];
FIG.5B shows the spectrum of jx(t);
FIG.5C shows the spectrum of H[x(t)]+jx(t);
FIG.6 is a block diagram showing the configuration of a conventional transmitting apparatus of the Mujtaba scheme;
FIG.7 is a block diagram showing a configuration example of a conventional Hilbert transformer;
FIG.8 shows conventional eye patterns on the receiving side;
FIG.8A shows an eye pattern of a transmission bit 1;
FIG.8B shows an eye pattern of a transmission bit 2;

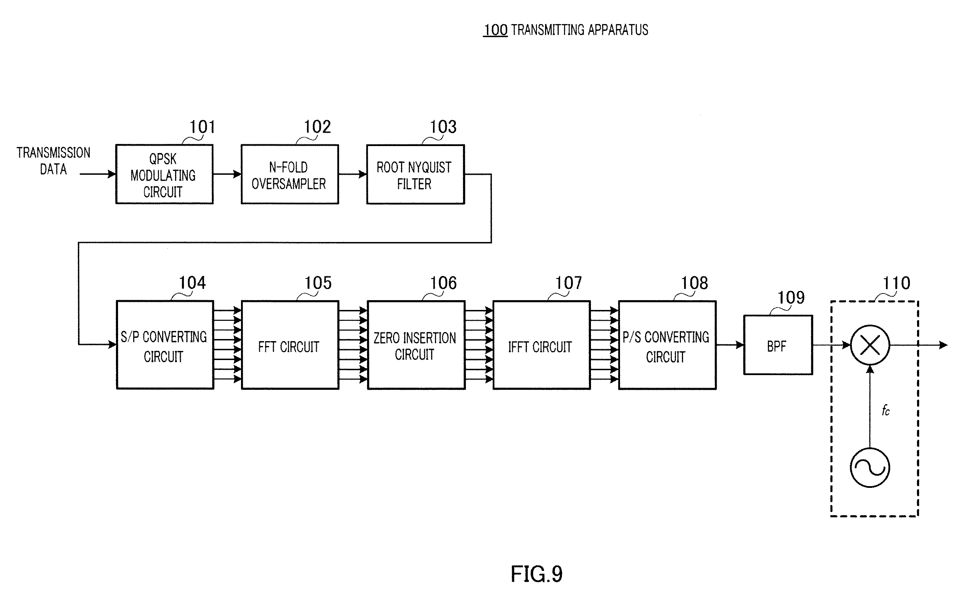

FIG.9 is a block diagram showing the configuration of a transmitting apparatus according to Embodiment 1;

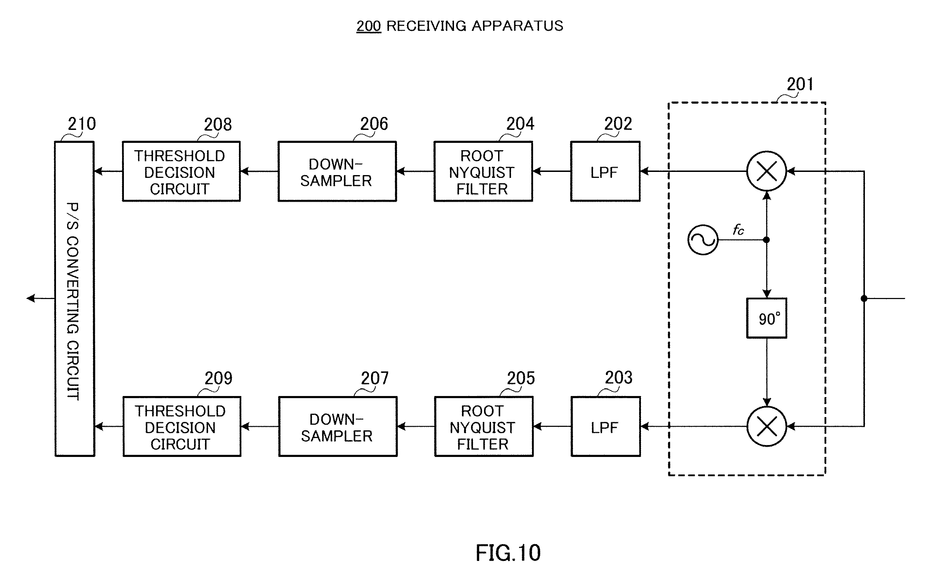

FIG.10 is a block diagram showing the configuration of a receiving apparatus;

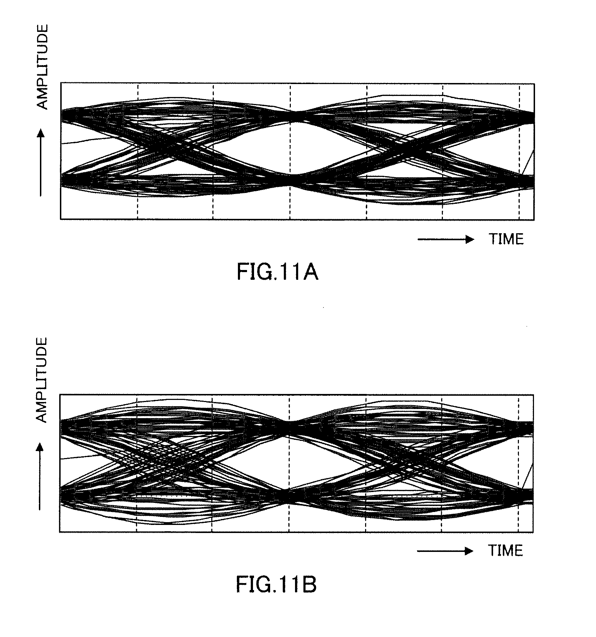

FIG.11 shows eye patterns in case where a signal transmitted from the transmitting apparatus according to Embodiment 1 is received;
FIG.11A shows an eye pattern of the transmission bit 1;
FIG.11B shows an eye pattern of the transmission bit 2; and

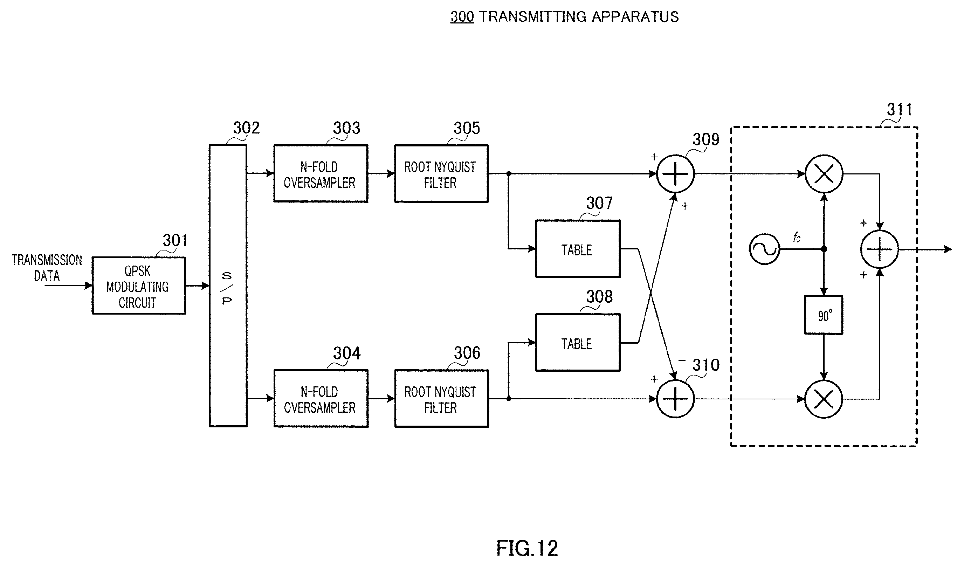

FIG.12 is a block diagram showing the configuration of the transmitting apparatus according to Embodiment 2.

Best Mode for Carrying Out the Invention

Hereinafter, embodiments of the present invention will be explained in detail with reference to the accompanying drawings.

(Embodiment 1)

FIG.9 shows the configuration of the transmitting apparatus according to Embodiment 1 of the present invention. Transmitting apparatus 100 inputs transmission data in QPSK modulating circuit 101, and QPSK modulating circuit 101 outputs the resulting QPSK modulated symbol to N-fold oversampler 102.

N-fold oversampler 102 oversamples symbols that are sequentially received as input, to an N-fold and sends out the resulting oversampled signal to root Nyquist filter 103. Here, although "N" for N-fold oversampler 102 may be set to an arbitrary positive integer, a case will be explained with the present embodiment where "N" is set to eight, that is, the order of oversampling N in N-fold oversampler 102 is set to eight. Serial-to-parallel converting circuit (S/P converting circuit) 104 receives as input the oversampled signal of the band limited by root Nyquist filter 103.

The number of parallel sequences in S/P converting circuit 104 is set to the same as the order of oversampling. That is, with the present embodiment, the order of oversampling N is set to eight and, consequently, S/P converting circuit 104 makes parallel the first to eighth oversampled signals of one symbol, and inputs the signals in FFT (Fast Fourier Transform) circuit 105. FFT circuit 105 performs an N-point fast Fourier transform. By this means, FFT circuit 105 can perform a complex Fourier transform on a per transmission symbol basis.

The output of FFT circuit 105 is sent out to zero insertion circuit 106. Zero insertion circuit 106 inserts zero in the components of either an USB component signal or LSB component signal outputted from FFT circuit 105. That is, zero insertion circuit 106 inserts zero in LSB components when transmission is performed using the USB, and inserts zero in USB components when transmission is performed using the LSB. For example, when transmission is performed using the USB, outputs of four sequences corresponding USB components among the outputs of eight sequences are outputted to IFFT (Inverse Fast Fourier Transform) circuit 107, and signals of four sequences corresponding to LSB components are outputted as zero to IFFT circuit 107. In this way, zero insertion circuit 106 makes signals SSB signals.

Transmitting apparatus 100 converts transmission data sequences which are converted into frequency domain signals, into time domain signals by IFFT circuit 107 and parallel-to-serial converting circuit (P/S converting circuit) 108. Bandpass filter (BPF) 109 limits the band of the signal converted in the time domain, subsequent frequency converter 110 converts the signal into a radio signal by multiplying the time domain signal by the carrier wave fc and the antenna (not shown) transmits this radio signal.

Radio signals which are made SSB signals by transmitting apparatus 100 can be demodulated by normal quadrature detection processing.

FIG.10 shows the configuration of a receiving apparatus that receives and demodulates radio signals which are made SSB signals and transmitted by transmitting apparatus 100. Receiving apparatus 200 inputs an SSB modulated wave received at an antenna (not shown), in quadrature detection section 201. Quadrature detecting section 201 multiplies the SSB modulated wave by $\cos\omega_c t$ or $\sin\omega_c t$ to extract the in-phase components and quadrature components of the received signal, and outputs the in-phase components and quadrature components to low pass filter (LPF) 202 and low pass filter (LPF) 203, respectively.

The outputs of LPF 202 and 203 are received as input in threshold decision circuits 208 and 209, respectively, through root Nyquist filters 204 and 205 and down-samplers 206 and 207. Threshold decision circuits 208 and 209 acquire received data sequences by performing hard decision processing. The received data sequences are combined into one data sequence by parallel-to-serial converting circuit (P/S converting circuit) 210. In this way, it is possible to demodulate SSB signals transmitted using the USB or LSB and acquire the data sequence.

FIG.11 shows eye patterns as a simulation result in case where receiving apparatus 200 receives SSB signals transmitted from transmitting apparatus 100 according to the present embodiment. FIG.11A shows, for example, the eye pattern of the bit 1 that is decided in threshold decision circuit 208, and FIG.11B shows, for example, the eye pattern of the bit 2 that is decided in threshold decision circuit 209. As is clear from FIG.11, the eyes of the eye patterns are open, so that it is possible to acquire received data of good error rate performance.

As explained above, the present embodiment makes it possible to perform a Hilbert transform on a per symbol basis (that is, SSB signal forming processing) by: oversampling each transmission symbol to an N-fold; performing an N-point FFT of the oversampled signal; inserting zero in the components of either an USB component signal or LSB component signal included in the signal subjected to the FFT; and performing an IFFT of the FFT signal in which zero is inserted in the components. As a result, Hilbert transform components generated by SSB signal forming processing are made uniform on the receiving side, and, consequently, the eye patterns open and the receiving side can acquire received data of good error rate performance.

(Embodiment 2)

As explained in Embodiment 1, features of the present invention include forming SSB signals by performing a Hilbert transform on a per transmission symbol basis. Embodiment 1 has presented a preferable configuration to realize the features of the present invention. The present embodiment realizes the above SSB signal forming processing with a different configuration from Embodiment 1.

FIG.12 shows the configuration of the transmitting apparatus according to the present embodiment. Transmitting apparatus 300 inputs transmission data in QPSK modulating section 301, and QPSK modulating section 301 sends out the resulting QPSK modulated symbol to serial-to-parallel converting circuit (S/P converting circuit) 302.

S/P converting circuit 302 divides symbols that are sequentially received as input, into two sequences, and sends out symbols of the first sequence and symbols of the second sequence to N-fold oversampler 303 and N-fold oversampler 304, respectively. Root Nyquist filters 305 and 305 limit the bands of the sampled signals acquired in N-fold oversamplers 303 and 304.

The output of root Nyquist filter 305 is sent out to table 307 and adder 309. Further, the output of root Nyquist filter 306 is sent out to table 308 and adder 310.

Table 307 outputs a Hilbert transform signal using the sample value of one transmission symbol as an address. Similarly, table 308 outputs a Hilbert transform signal using the sample value of one transmission symbol as an address. That is, tables 307 and 308 store Hilbert transform signals H[x(t)] determined according to, for example, above-described equation (2). Then, tables 307 and 308 each output the stored Hilbert transform signal H[x(t)] using a sample value of one symbol (corresponding to x(t)) as an address. Here, in case of the present embodiment, QPSK modulation is performed and, therefore, the oversample values of symbols, that is, x(t), are either "1" or "-1," so that the configurations of tables 307 and 308 are simple.

Adder 309 adds the output signal from root Nyquist filter 305 and the Hilbert transform signal acquired from table 308. Further, adder 310 subtracts the Hilbert transform signal acquired from table 307, from the output signal from root Nyquist filter 306. By this means, adders 309 and 310 output the real components of the USB signal and the imaginary components of the USB signal, or the real components of the LSB signal and the imaginary components of the LSB signal.

The outputs of adders 309 and 310 are orthogonally-multiplexed by orthogonal multiplexing section 311. That is, when transmission is performed using the USB, adders 309 and 310 output the real components of the USB signal and the imaginary components of the USB signal, and orthogonal multiplexing section 311 orthogonally-multiplexes these components to form a USB modulated wave. Similarly, transmission can be performed using the LSB alone by employing the circuit configuration in case where transmission is performed using the USB and inverting the signs of the outputs from tables 307 and 308, adders 309 and 310 output the real components of the LSB signal and the imaginary components of the LSB signal, and orthogonal multiplexing section 311 orthogonally-multiplexes these components to form a LSB modulated wave.

As described above, the present embodiment provides: first oversampler 303 that oversamples the first transmission symbol; second oversampler 304 that oversamples the second transmission symbol; first table 307 that outputs a Hilbert transform signal using as an address a sample value of the first transmission symbol acquired in first oversampler 303; second table 308 that outputs a Hilbert transform signal using as an address a sample value of the second transmission symbol acquired in second oversampler 304; first adder 309 that adds the Hilbert transform signal acquired in first oversampler 303 and the Hilbert transform signal acquired from second table 308; second adder 310 that subtracts the Hilbert transform signal acquired from first table 307, from the Hilbert transform signal acquired in second oversampler 304; and multiplexing section 311 that multiplexes the output signal from first adder 309 and the output signal from second adder 310, and can perform a Hilbert transform on a per transmission symbol basis, so that Hilbert transform components generated by SSB signal forming processing are made uniform on the receiving side, and, consequently, the eye patterns open and the receiving side can acquire received data of good error rate performance.

Industrial Applicability

The present invention is widely applicable to wireless communication equipment for making transmission signals SSB signals and transmitting the SSB signals.

**Claims**

1. A transmitting apparatus that makes a transmission signal a single side band signal and transmits the single side band signal, the transmitting apparatus comprising:

   an N-fold oversampler that oversamples a transmission symbol to an N-fold;
   a serial-to-parallel converting circuit that converts sampling data acquired in the N-fold oversampler, into N sequences of parallel data on a per symbol basis;
   an N-point Fourier transform circuit that performs a Fourier transform of the N sequences of the parallel data;
   a zero insertion circuit that inserts zero in components of one of an upper side band component signal and a lower side band component signal outputted from the Fourier transform circuit;
   an inverse Fourier transform circuit that performs an inverse Fourier transform of an output of the zero insertion circuit; and
   a parallel-to-serial converting circuit that performs parallel-to-serial conversion of an output of the inverse Fourier circuit.

2. A single side band signal forming method comprising: oversampling a transmission symbol to an N-fold;
   performing an N-point Fourier transform of an oversampled signal;
   inserting zero in components of one of an upper side band component signal and a lower side band component signal included in a signal subjected to the Fourier transform; and
performing an inverse Fourier transform of the signal which is subjected to the Fourier transform and in which the zero is inserted in the components.

3. A transmitting apparatus that makes a transmission signal a single side band signal and transmits the single side band signal, the transmitting apparatus comprising:

> a first oversampler that oversamples a first transmission symbol;
> a second oversampler that oversamples a second transmission symbol;
> a first table that outputs a Hilbert transform signal using as an address a sample value of the first transmission symbol acquired in the first oversampler;
> a second table that outputs a Hilbert transform signal using as an address a sample value of the second transmission symbol acquired in the second oversampler;
> a first adder that adds the Hilbert transform signal acquired in the first oversampler and the Hilbert transform signal acquired from the second table;
> a second adder that subtracts the Hilbert transform signal acquired from the first table, from the Hilbert transform signal acquired in the second oversampler; and
> a multiplexing section that multiplexes an output signal from the first adder and an output signal from the second adder.

FIG.1A $x(t)$

FIG.1B $H[x(t)]$

FIG.1C $H[H[x(t)]] = -x(t)$

FIG.1D $-H[x(t)]$

FIG.2A

$x(t)$

FIG.2B

$jH\ [x(t)]$

FIG.2C

$x(t)+jH\ [x(t)]$

FIG.3A

$-H\ [x(t)]$

FIG.3B

$jx(t)$

FIG.3C

$-H\ [x(t)]+jx(t)$

FIG.4A

$x(t)$

FIG.4B

$-jH\,[x(t)]$

FIG.4C

$x(t)-jH\,[x(t)]$

FIG.5A

$H [x(t)]$

FIG.5B

$jx(t)$

FIG.5C

$H [x(t)]+jx(t)$

FIG.6

FIG.7

FIG.8A

FIG.8B

100 TRANSMITTING APPARATUS

TRANSMISSION DATA

101 QPSK MODULATING CIRCUIT

102 N-FOLD OVERSAMPLER

103 ROOT NYQUIST FILTER

104 S/P CONVERTING CIRCUIT

105 FFT CIRCUIT

106 ZERO INSERTION CIRCUIT

107 IFFT CIRCUIT

108 P/S CONVERTING CIRCUIT

109 BPF

110

$fc$

FIG.9

200 RECEIVING APPARATUS

201

fc

90°

202 LPF
203 LPF

204 ROOT NYQUIST FILTER
205 ROOT NYQUIST FILTER

206 DOWN-SAMPLER
207 DOWN-SAMPLER

208 THRESHOLD DECISION CIRCUIT
209 THRESHOLD DECISION CIRCUIT

210 P/S CONVERTING CIRCUIT

FIG.10

FIG.11A

FIG.11B

300 TRANSMITTING APPARATUS

FIG.12

EP 2 134 047 A1

## INTERNATIONAL SEARCH REPORT

International application No.

PCT/JP2007/057781

A. CLASSIFICATION OF SUBJECT MATTER
*H04L27/02(2006.1)i, H04B1/04(2006.1)i*

According to International Patent Classification (IPC) or to both national classification and IPC

B. FIELDS SEARCHED

Minimum documentation searched (classification system followed by classification symbols)
H04L27/02, H04B1/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | S.A. Mujtaba, "Performance analysis of coded SSB-QPSK in mobile radio channels", Proceedings of 1998 URSI International Symposium on Signals, Systems, and Electronics, 1998, Pages 112-117 | 1-3 |
| A | JP 11-239189 A (Lucent Technologies Inc.), 31 August, 1999 (31.08.99), Fig. 6; Par. Nos. [0033] to [0035] & US 6091781 A & EP 0917325 B1 | 1-3 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 April, 2007 (24.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Syed Aon Mujtaba.** A Novel Scheme for Transmitting QPSK as a Single-Sideband Signal. *IEEE Globalcomm.,* 1998, 592-597

- **Syed Aon Mujtaba.** Performance Analysis of Coded SSB-QPSK in Mobile Radio Channels. *IEEE Globalcomm.,* 1998, 112-117